# EUROPEAN PATENT SPECIFICATION

(11) **EP 1 676 730 B1**
(45) Date of publication and mention of the grant of the patent: **16.04.2008**
(21) Application number: 04293177.4
(22) Date of filing: 31.12.2004
(51) Int. Cl.: B60C 17/00, B60C 9/02

(54) **Extended mobility tire having separated carcass portions in summit**
Notlaufreifen mit getrennten Karkasslagen im Kronenbereich
Pneumatique à mobilité étendue avec des nappes de carcasse séparées dans le sommet

(43) Date of publication of application: 05.07.2006
(73) Proprietor: Societe de Technologie Michelin STM, 63000 Clermont-Ferrand (FR); Michelin Recherche et Technique S.A., 1763 Granges-Paccot (CH)
(72) Inventor: Chambriard, François, 63110 Beaumont (FR)
(74) Representative: Dequire, Philippe Jean-Marie Denis

(56) References cited:
- EP-A- 1 127 718
- US-A- 2 976 905
- US-A- 3 730 246
- US-B1- 6 263 935

## Description

### BACKGROUND OF THE INVENTION

The invention relates to a tire, more specifically to a pneumatic tire capable of continued mobility in a deflated condition.

For some years, tire manufacturers have been devoting considerable effort to developing original solutions to a problem dating back to the very first time use was made of wheels fitted with tires of the inflated type, namely how to allow the vehicle to continue on its journey despite a considerable or total loss of pressure in one or more tires. For decades, the spare wheel was considered to be the sole, universal solution. Then, more recently, the considerable advantages linked to the possible elimination thereof have become apparent. The concept of "extended mobility" is being developed. The associated techniques allow travel to continue with the same tire, within certain limits, after a puncture or a drop in pressure. This allows the driver to travel to a repair point, for example, without having to stop, in frequently dangerous circumstances, to fit the spare wheel.

Two major types of extended-mobility technology are currently available on the automobile market. On the one hand, there are tires of the self-supporting type (often known by their English abbreviation ZP, standing for "zero pressure"). Self-supporting tires are capable of bearing a load under reduced pressure, or indeed without pressure, thanks to sidewalls which are reinforced, most frequently by means of inserts of rubber material, provided in the sidewalls. A tire of this type is known, e.g. from US-A-6 263 935.

On the other hand, wheels are available which are equipped with supports capable of supporting the inside of the tread of a tire in the event of sagging of the sidewalls following a drop in pressure. This solution is advantageously combined with a tire comprising a bottom zone capable of minimising the risk of the tire sliding out of the rim. This solution is advantageous since it makes it possible to keep substantially intact the characteristics of travel under normal conditions. On the other hand, it has the drawback of requiring an additional component, the support, for each of the wheels of the vehicle.

Coming back to self-supporting tires, the extended mobility requirements are such that it is in general difficult to provide tires with comfort and driving characteristics that are comparable to standard tires. To support the vehicle load under low pressure conditions, the sidewall inserts are provided with high modulus materials, which generally have reduced comfort characteristics.

### BRIEF SUMMARY OF THE INVENTION

In order to avoid these drawbacks, the invention provides a tire comprising an inner carcass structure and an outer carcass structure, both anchored in each side of the tire in a bead, each bead having a base which is intended to be mounted on the tire's design mounting rim, each bead being extended radially upward by a sidewall portion, a reinforced summit, the sidewall portions joining said summit , said bead further comprising an anchoring zone for anchoring said carcass structures in said bead, said tire being adapted for continued mobility in a substantially deflated condition and comprising runflat inserts provided in the axially inner portion of the sidewalls, said reinforced summit being provided with at least one reinforcing cord arrangement disposed between said inner carcass structure and said outer carcass structure.

These characteristics give the possibility to provide an extended mobility tire in which the summit rigidity is increased, thereby improving the flatness of the summit during extended mobility operation.

This also allows to provide eventual metallic reinforcing cords farther inside the tire (nearer the tire cavity), resulting in a better protection of these cords.

These characteristics also give the possibility to provide an extended mobility tire having thinner sidewall inserts, thereby increasing the comfort level.

In a preferred embodiment, the tire comprises two summit reinforcing cord arrangements provided with cords positioned with opposed angles.

In a variant, the tire further comprises a third summit reinforcing cord arrangements, provided between said inner and outer carcass structures, such as, for instance, a cord arrangement provided with circumferential cords, disposed substantially at an angle of zero degree with respect to the circonferential direction. Such cords may be made of metallic alloy.

The tire preferably further comprises sidewalls inter carcass structures inserts, extending radially outwardly along said sidewalls between said carcass structures from said anchoring zone to an upper portion of the outer sidewall, the Modulus of extension ME10 of said sidewalls inter carcass structures inserts material being lower than the Modulus of extension ME10 of said runflat inserts material.

The elastomeric material of said runflat inserts may have a Modulus of extension ME10 comprised between 4 to 9 Mpa, and most preferably comprised between 5 to 6 Mpa.

The elastomeric material of said sidewalls inter carcass structures inserts may have a Modulus of extension ME10 comprised between 2 to 5 Mpa, and most preferably comprised between 3 to 4 Mpa.

The runflat inserts may be in direct contact with the cords of said carcass structure.

### BRIEF DESCRIPTION OF THE DRAWINGS

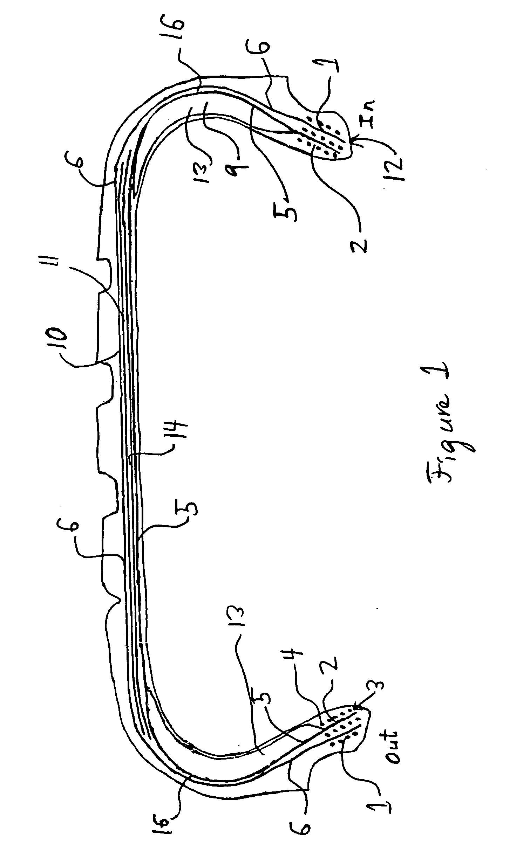

All the details of embodiment are given in the following description, supplemented by Figure 1 which illustrates an example of a runflat tire according to the invention, taken along a meridian plane through the axis of rotation.

### DETAILED DESCRIPTION OF THE INVENTION

"Axial" and "axially" mean the lines or directions that are parallel to the axis of rotation of the tire.

"Radial" and "radially" mean directions radially toward or away the axis of rotation of the tire.

"Angle defined with respect to an axial direction" means an angle measured axially and radially outwardly from the innerside of the tire; such an angle is between 0 and 180 degrees.

The reinforcement armature or reinforcement of the tires is currently ― and most frequently - constituted by stacking one or more plies conventionally referred to as "carcass plies", "crown plies", etc. This manner of designating the reinforcement armatures is derived from the manufacturing process, which consists of producing a series of semi-finished products in the form of plies, provided with cord reinforcing threads which are frequently longitudinal, which products are then assembled or stacked in order to build a tire blank. The plies are produced flat, with large dimensions, and are subsequently cut according to the dimensions of a given product. The plies are also assembled, in a first phase, substantially flat. The blank thus produced is then shaped to adopt the toroidal profile typical of tires. The semi-finished products referred to as "finishing" products are then applied to the blank, so as to obtain a product ready to be vulcanised.

Such a type of "conventional" process involves, in particular for the phase of manufacture of the blank of the tire, the use of an anchoring element (generally a bead wire), used for anchoring or holding the carcass reinforcement in the zone of the beads of the tire. Thus, in this type of process, a portion of all the plies constituting the carcass reinforcement (or only a part thereof) is turned up around a bead wire arranged in the tire bead. In this manner, the carcass reinforcement is anchored in the bead.

The general adoption of this type of conventional process in the industry, despite the numerous different ways of producing the plies and assemblies, has led the person skilled in the art to use a vocabulary which reflects this process; hence the generally accepted terminology, comprising in particular the terms "plies", "carcass", "bead wire", "shaping" to designate the change from a flat profile to a toroidal profile, etc.

However, there are nowadays tires which do not, properly speaking, comprise "plies" or "bead wires" in accordance with the preceding definitions. For example, document EP 0 582 196 describes tires manufactured without the aid of semi-finished products in the form of plies. For example, the cords of the different reinforcement structures are applied directly to the adjacent layers of rubber mixes, the whole being applied in successive layers on a toroidal core having a shape which makes it possible to obtain directly a profile similar to the final profile of the tire being manufactured. Thus, in this case, there are no longer any "semi-finished products", nor "plies", nor "bead wires". The base products, such as the rubber mixes and reinforcing threads in the form of cords or filaments, are applied directly to the core. As this core is of toroidal form, the blank no longer has to be shaped in order to change from a flat profile to a profile in the form of a torus.

Furthermore, some of the examples of embodiment of tires described in this document do not have the "conventional" upturn of the carcass ply around a bead wire. In these examples, this type of anchoring is replaced by an arrangement in which circumferential filaments are arranged adjacent to said sidewall reinforcement structure, the whole being embedded in an anchoring or bonding rubber composition.

There are also processes for assembly on a toroidal core using semi-finished products specially adapted for quick, effective and simple laying on a central core. Finally, it is also possible to use a mixture comprising both certain semi-finished products to produce certain architectural aspects (such as plies, bead wires, etc.), whereas others are produced from the direct application of mixes and/or reinforcing threads in the form of filaments or strips.

In the present document, in order to take into account recent technological developments both in the field of manufacture and in the design of products, the conventional terms such as "plies", "bead wires", etc., are advantageously replaced by neutral terms or terms which are independent of the type of process used. Thus, the term "carcass structure" is valid as a designation for the reinforcement cords of a carcass ply in the conventional process, and the corresponding cords, generally applied at the level of the beads, sidewalls and summit of a tire produced in accordance with a process without semi-finished products. The term "anchoring zone", for its part, may equally well designate the "traditional" upturn of a carcass ply around a bead wire of a conventional process or the assembly formed by the circumferential filaments, the rubber composition and the adjacent sidewall reinforcement portions of a bottom zone produced with a process with application to a toroidal core.

In the present description, the term "cord" very generally designates both monofilaments and multifilaments or assemblies such as cables, plied yarns or alternatively any equivalent type of assembly, whatever the material and the treatment of these cords. This may, for example, involve surface treatments, coating or pre-sizing in order to promote adhesion to the rubber. The expression "unitary cord" designates a cord formed of a single element, without assembling. The term "multifilament", in contrast, designates an assembly of at least two unitary elements to form a cable, plied yarn etc.

"Characteristics of the cord" is understood to mean, for example, its dimensions, its composition, its characteristics and mechanical properties (in particular the modulus), its chemical characteristics and properties, etc.

In the present description, "contact" between a cord and a layer of bonding rubber is understood to mean the fact that at least part of the outer circumference of the cord is in intimate contact with the rubber composition constituting the bonding rubber.

It is known that, conventionally, the carcass ply or plies is/are turned up about a bead wire. The bead wire then performs a carcass anchoring function. Thus, in particular, it withstands the tension which develops in the carcass cords for example under the action of the inflation pressure. Some arrangements described in the present document makes it possible to provide a similar anchoring function. It is also known to use the bead wire of conventional type to perform the function of clamping the bead on a rim. According to the invention, any type of anchoring may be used.

"Sidewalls" refers to the portions of the tire, most frequently of low flexural strength, located between the crown and the beads. "Sidewall mix" refers to the rubber mixes located axially to the outside relative to the cords of the reinforcement structure of the carcass and to their bonding rubber. These mixes usually have a low elasticity modulus.

"Bead" refers to the portion of the tire adjacent radially internally to the sidewall.

"Modulus of extension ME10" of a rubber composition is understood to mean an apparent secant modulus of extension obtained at a uniaxial deformation of extension of the order of 10% measured at 23°C in accordance with Standard ASTM D 412.

As a reminder, "radially upwards" or "radially upper" or "radially externally" means towards the largest radii.

A reinforcement or reinforcing structure or carcass structure will be said to be radial when its cords are arranged at 90°, but also, according to the terminology in use, at an angle close to 90°.

The tire of the invention comprises a bead 1 provided with a seat 12, specially adapted to fit on the tire mounting rim. The bead extends substantially radially to the sidewalls 13.

The tire comprises an inner carcass structure 5, extending from bead to bead or leaving a gap between two half structures, for instance in the substantially median portion of the summit. The radially inwardmost extent of the carcass structure 5 terminates in an anchoring zone 2 of the bead 1. In the example illustrated in figure 1, the carcass structure is not turned up around bead cores or other bead reinforcement. That is to say, each axial coordinate defining the profile of the carcass structure has a unique radial position for each radial position less than that of the tire equator. The carcass structure is anchored in the bead portion by a bead reinforcement 3. A preferred embodiment of such a reinforcement comprises a cord arrangement 4 provided with at least one substantially circumferentially oriented cord laterally bordering the carcass structure on at least one side. In this instance "anchored" in the bead portion means that the cord arrangement resists the tension developed in the carcass structure during inflated or deflated use of the tire by the adherence of the carcass reinforcing structure laterally with the cord arrangement rather than being wound around a traditional bead core.

The mechanical properties of the anchoring zone 4 may be optimized in using an elastomeric bead filler having preferably a relatively high elasticity modulus.

The tire further comprises an outer carcass structure 6, provided outwardly from said inner carcass structure 5. The outer carcass structure is also anchored in the anchoring zone 2, in a manner similar to the inner carcass structure. The inner and outer carcass structures extend along substantially parallel paths along the sidewalls and summit.

The tire of the invention is adapted for operation in continued mobility in a substantially deflated condition. In order to achieve these characteristics, runflat inserts 9 are provided in the axially inner portion of each sidewall 13. The elastomeric material of said runflat inserts has a Modulus of extension ME10 comprised between 4 to 9 Mpa, and most preferably comprised between 5 to 6 Mpa. The runflat insert may be in direct contact with the cords of said carcass structure.

The summit 14 comprises reinforcement layers of known type, for instance, such as illustrated, it may be provided with at least two summit reinforcing cord arrangements 10 and 11 provided with cords positioned, in a known manner, with opposed angles, for instance with angles between 20 to 70 degrees, with respect to the circumferential direction. In accordance with the invention, the summit reinforcing cords are disposed between said inner carcass structure 5 and said outer carcass structure 6. To this end, the inter-carcass space is preferably enlarged from the shoulder portion toward the summit, in order to provide sufficient space to set the reinforcement elements of the summit.

The tire may also further comprise a third summit reinforcing cord arrangement, which is also preferably provided between said inner and outer carcass structures 5 and 6. Such an arrangement may be provided with circumferential cords, disposed substantially at an angle of zero degree with respect to the circonferential direction. Such cords may be made of metallic alloy.

Either one of the two summit reinforcing cord arrangement 10 or 11, and or the zero degree cord arrangement may also be provided outside the inter-carcass space of the summit zone, for instance radially internally or radially externally of the two carcass structures. In a further variant, other reinforcement elements may be provided between the two carcass structures, or outside the inter-carcass space.

The tire is advantageously provided with sidewall inter carcass structure inserts 16. These inserts extend radially outwardly along said sidewalls between said carcass structures 5 and 6 from said anchoring zone 1 to an upper portion of the outer sidewall.

The Modulus of extension ME10 of said sidewall inter carcass structure inserts material is preferably lower than the Modulus of extension ME10 of said runflat inserts material. For instance, the elastomeric material of said sidewall inter carcass structure inserts has a Modulus of extension ME10 comprised between 2 to 5 Mpa, and most preferably comprised between 3 to 4 Mpa.

The tire may also further comprise sidewall inter carcass structure inserts 16 that extend along said sidewalls between said carcass structures 5 and 6 from said anchoring zone 1 to an upper portion of the outer sidewall. In another embodiment, the inter-carcass space is filled up with known type sidewall elastomeric material, preferably of low modulus.

The inner and outer sidewalls may also be provided with runflat inserts 9 having different shapes, dimensions, materials, or combinations thereof, providing asymmetrical runflat inserts configurations.

In order to position the reinforcement cords as precisely as possible, it is very advantageous to build the tire on a rigid support, for instance a rigid core imposing the shape of its inner cavity. All the components of the tire, which are disposed directly in their final place, are applied onto this core in the order required by the final architecture, without undergoing shaping at any moment of the building. In this case, the tire can be molded and vulcanized in the manner explained in US 4,895,692.

While the invention has been described in combination with embodiments thereof, it is evident that many alternatives, modifications, and variations will be apparent to those skilled in the art in light of the foregoing teachings. Accordingly, the invention is intended to embrace all such alternatives, modifications and variations as fall within the scope of the appended claims.

## Claims

1. A tire comprising an inner carcass structure (5) and an outer carcass structure (6), both anchored in each side of the tire in a bead (1), each bead having a base which is intended to be mounted on the tire's design mounting rim, each bead being extended radially upward by a sidewall portion (13), a reinforced summit (14), the sidewall portions (13) joining said summit (14), said bead (1) further comprising an anchoring zone (4) for anchoring said carcass structures (5, 6) in said bead, said tire being adapted for continued mobility in a substantially deflated condition and comprising runflat inserts (9) provided in the axially inner portion of the sidewalls (13), **characterized by** said reinforced summit (14) being provided with at least one reinforcing cord arrangement (10, 11) disposed between said inner carcass structure (5) and said outer carcass structure (6).

2. The tire of claim 1, comprising two summit reinforcing cord arrangements (10, 11) provided with cords positioned with opposed angles.

3. A tire according to any one of preceding claims, further comprising a third summit reinforcing cord arrangement, provided between said inner and outer carcass structures (5, 6).

4. A tire according to any one of preceding claims, further comprising sidewall inter carcass structure inserts (16), extending radially outwardly along said sidewalls between said carcass structures (5, 6) from said anchoring zone (1) to an upper portion of the outer sidewall, the Modulus of extension ME10 of said sidewall inter carcass structure inserts material being lower than the Modulus of extension ME10 of said runflat inserts (9) material.

5. A tire according to any one of preceding claims, wherein the elastomeric material of said runflat inserts has a Modulus of extension ME10 comprised between 4 to 9 Mpa, and most preferably comprised between 5 to 6 Mpa.

6. A tire according to any one of preceding claims, wherein the elastomeric material of said sidewall inter carcass structure inserts (16) has a Modulus of extension ME10 comprised between 2 to 5 Mpa, and most preferably comprised between 3 to 4 Mpa.

7. The tire of claim 1, wherein said runflat inserts (9) are in direct contact with the cords of said carcass structure.

## Patentansprüche

1. Reifen mit einer inneren Karkassenstruktur (5) und einer äußeren Karkassenstruktur (6), die beide in jeder Seite des Reifens in einem Wulst (1) verankert sind, wobei jeder Wulst eine Sohle hat, die dazu bestimmt ist, auf die Design-Montagefelge des Reifens montiert zu werden, wobei jeder Wulst radial nach oben von einem Seitenwandabschnitt (13) verlängert wird, sowie mit einem verstärkten Scheitelbereich (14), wobei die Seitenwandabschnitte (13) an den Scheitelbereich anschließen, wobei der Wulst (1) weiter eine Verankerungszone (4) zur Verankerung der Karkassenstrukturen (5, 6) im Wulst aufweist, wobei der Reifen für erweiterte Mobilität in einem im Wesentlichen luftleeren Zustand geeignet ist und Notlaufeinlagen (9) aufweist, die in dem axial inneren Abschnitt der Seitenwände (13) vorgesehen sind, **dadurch gekennzeichnet, dass** der verstärkte Scheitelbereich (14) mit mindestens einer Verstärkungscordanordnung (10, 11) versehen ist, die zwischen der inneren Karkassenstruktur (5) und der äußeren Karkassenstruktur (6) angeordnet ist.

2. Reifen nach Anspruch 1, der zwei Scheitelbereich-Verstärkungscordanordnungen (10, 11) aufweist, die mit Corden versehen sind, die mit entgegengesetzten Winkeln angeordnet sind.

3. Reifen nach einem der vorhergehenden Ansprüche, der weiter eine dritte Scheitelbereich-Verstärkungscordanordnung aufweist, die zwischen der inneren und der äußeren Karkassenstruktur (5, 6) vorgesehen ist.

4. Reifen nach einem der vorhergehenden Ansprüche, der weiter Seitenwandeinlagen (16) zwischen Karkassenstrukturen aufweist, die sich radial außen entlang der Seitenwände zwischen den Karkassenstrukturen (5, 6) von der Verankerungszone (1) bis zu einem oberen Abschnitt der äußeren Seitenwand erstrecken, wobei der Dehnungsmodul ME10 des Werkstoffs der Seitenwandeinlagen zwischen Karkassenstrukturen niedriger ist als der Dehnungsmodul ME10 des Werkstoffs der Notlaufeinlagen (9).

5. Reifen nach einem der vorhergehenden Ansprüche, wobei das Elastomermaterial der Notlaufeinlagen einen Dehnungsmodul ME10 zwischen 4 und 9 MPa und vorzugsweise zwischen 5 und 6 MPa hat.

6. Reifen nach einem der vorhergehenden Ansprüche, wobei das Elastomermaterial der Seitenwandeinlagen (16) zwischen Karkassenstrukturen einen Dehnungsmodul ME10 zwischen 2 und 5 MPa und vorzugsweise zwischen 3 und 4 MPa hat.

7. Reifen nach Anspruch 1, wobei die Notlaufeinlagen (9) in direktem Kontakt mit den Corden der Karkassenstruktur sind.

## Revendications

1. Pneumatique comprenant une structure de carcasse interne (5) et une structure de carcasse externe (6), toutes deux ancrées dans un bourrelet sur chacun des côtés du pneumatique (1), chaque bourrelet présentant une base destinée à être montée sur la jante de montage du modèle de pneumatique, chaque bourrelet étant prolongé radialement vers le haut par une portion (13) de flanc, un sommet (14) renforcé, les portions (13) de flanc rejoignant ledit sommet (14), ledit bourrelet (1) comprenant de plus une zone d'ancrage (4) pour ancrer lesdites structures de carcasse (5, 6) dans ledit bourrelet, ledit pneumatique étant adapté pour qu'il soit possible de continuer à se déplacer lorsqu'il est à l'état essentiellement dégonflé et comprenant des inserts (9) de roulage à plat prévus dans la portion axialement intérieure des flancs (13), **caractérisé en ce que** ledit sommet (14) renforcé est doté d'au moins un agencement (10, 11) de câbles de renfort placé entre ladite structure (5) de carcasse interne et ladite structure (6) de carcasse externe.

2. Pneumatique selon la revendication 1, comprenant deux agencements (10, 11) de câbles de renfort de sommet dont les câbles sont positionnés à des angles opposés.

3. Pneumatique selon l'une quelconque des revendications précédentes, comprenant de plus un troisième agencement de câbles de renfort de sommet prévu entre lesdites structures de carcasse interne et externe (5,6).

4. Pneumatique selon l'une quelconque des revendications précédentes, comprenant de plus des inserts (16) de flanc situés entre les structures de carcasse, s'étendant radialement vers l'extérieur le long desdits flancs entre lesdites structures (5, 6) de carcasse à partir de ladite zone d'ancrage (1) jusqu'à une portion supérieure du flanc externe, le module d'allongement ME10 du matériau desdits inserts de flanc situés entre les structures de carcasse étant inférieur au module d'allongement ME10 du matériau desdits inserts (9) de roulage à plat.

5. Pneumatique selon l'une quelconque des revendications précédentes, dans lequel le matériau élastomère desdits inserts de roulage à plat présente un module d'allongement ME10 compris entre 4 et 9 MPa et de la façon la plus préférable compris entre 5 et 6 MPa.

6. Pneumatique selon l'une quelconque des revendications précédentes, dans lequel le matériau élastomère desdits inserts (16) de flanc situés entre les structures de carcasse présente un module d'allongement ME10 compris entre 2 et 5 MPa et de la façon la plus préférable compris entre 3 et 4 MPa.

7. Pneumatique selon la revendication 1, dans lequel lesdits inserts (9) de roulage à plat sont en contact direct avec les câbles de ladite structure de carcasse.
